(19) Europäisches Patentamt
European Patent Office
Office européen des brevets

(11) **EP 4 769 967 A1**

(12) **EUROPEAN PATENT APPLICATION**
published in accordance with Art. 153(4) EPC

(43) Date of publication:
01.07.2026 Bulletin 2026/27

(21) Application number: 24855431.3

(22) Date of filing: 19.06.2024

(51) International Patent Classification (IPC):
*H04B 7/0456* (2017.01)

(52) Cooperative Patent Classification (CPC):
H04B 7/0456; H04B 7/06; H04B 7/08

(86) International application number:
PCT/CN2024/100129

(87) International publication number:
WO 2025/039702 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.08.2023 CN 202311059800

(71) Applicant: Datang Mobile Communications
Equipment Co., Ltd.
Beijing 100085 (CN)

(72) Inventor: SUN, Wenlong
Beijing 100085 (CN)

(74) Representative: dompatent
Partnerschaft von
Patentanwälten und Rechtsanwälten mbB
Deichmannhaus am Dom
Bahnhofsvorplatz 1
50667 Köln (DE)

(54) **CODEBOOK GENERATION METHOD AND APPARATUS, AND COMMUNICATION DEVICE**

(57) This disclosure provides a codebook generation method and apparatus, and communication device, and pertains to the field of communication technology. The method includes: determining an edge value of an angular domain set corresponding to a beam of an antenna array; when the edge value of the angular domain set is less than or equal to a scanning target area of the antenna array, iteratively updating a beamwidth, beam directional angles, and the edge value of the angular domain set of the beam until an updated edge value of the angular domain set is greater than the scanning target area; obtaining the angular domain set, and determining a codebook size corresponding to the antenna array based on a result of counting the iterative updates; the codebook size is used for indicating a quantity of codewords contained in a codebook corresponding to the antenna array; the angular domain set includes the beam directional angles obtained in each iterative update.

Determining an edge value of an angular domain set corresponding to a beam of an antenna array — 101

In a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area — 102

Obtaining the angular domain set and determining the codebook size corresponding to the antenna array based on a result of counting the iterative updates — 103

Fig. 1

# EP 4 769 967 A1

## Description

### CROSS-REFERENCE TO RELATED APPLICATION

This application claims priority to Chinese Patent Application No. 202311059800.6, filed on August 22, 2023, and entitled "codebook generation method and apparatus, and communication device", disclosure of which is incorporated herein by reference in its entirety.

### TECHNICAL FIELD

This disclosure relates to the field of communication technology, and in particular to a codebook generation method and apparatus, and a communication device.

### BACKGROUND

Antenna arrays implementing the antenna function by conducting electromagnetic radiation based on the leaky wave principle, a representative of which is reconfigurable holographic surfaces (RHS) antenna array, typically use waveguides (transmission lines, etc.) to transmit signals, and control the amplitude of electromagnetic radiation through openings or adjustable elements on the waveguides. Due to physical structure limitations of these leaky-wave antenna arrays, analog beamforming can only be achieved by changing the amplitude, rather than by changing the phase (because the phase at each radiating element is completely fixed, known, and unadjustable). However, analog beamforming of conventional antenna arrays relies on phase modulation. As a result, traditional beamforming schemes are unsuitable for leaky wave-based antenna systems. There is an urgent need to design a codebook generation scheme for amplitude-modulated antenna arrays.

### SUMMARY

This disclosure aims to provide a codebook generation method and apparatus, and communication device, to solve the codebook generation problem in leaky-wave antenna control.

An embodiment of this disclosure provides a codebook generation method, including:

determining an edge value of an angular domain set corresponding to a beam of an antenna array;
in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area;
obtaining the angular domain set, and determining a codebook size corresponding to the antenna array based on a result of counting the iterative updates;
wherein the codebook size is used for indicating a quantity of codewords contained in a codebook corresponding to the antenna array; the angular domain set includes the beam directional angles obtained in each iterative update.

Optionally, the method further includes:

determining an initial value of the beamwidth based on first information of the antenna array and an initial value of the beam directional angle;
the determining the edge value of the angular domain set corresponding to the beam of the antenna array includes:

determining the edge value of the angular domain set based on the initial value of the beamwidth and an initial edge value of the angular domain set;
wherein the initial edge value of the angular domain set is pre-configured or pre-defined.

Optionally, in a case that the edge value of the angular domain set is less than or equal to the scanning target area of the antenna array, iteratively updating the beamwidth, beam directional angle, and edge value of the angular domain set until the updated edge value of the angular domain set is greater than the scanning target area includes:
iteratively updating the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the

2

angular domain set;

determining an updated edge value of the angular domain set based on the updated beamwidth and the updated beam directional angles; and

logging a number of times update occurs.

Optionally, the method further includes:

adding the updated beam directional angles into the angular domain set.

Optionally, the determining the updated beamwidth and the updated beam directional angles based on the edge value of the angular domain set includes:

calculating the updated beamwidth and the updated beam directional angles based on an equation set composed of a function for computing the beamwidth and a first function related to the edge value of the angular domain set.

Optionally, the determining the updated edge value of the angular domain set based on the updated beamwidth and the updated beam directional angles includes:

calculating the updated edge value of the angular domain set by using the following formula:

$$\text{edg} = \theta + \frac{\Delta\theta}{2}$$

wherein, edg denotes the edge value of the angular domain set, $\theta$ denotes the beam directional angle, and $\Delta\theta$ denotes the beamwidth.

Optionally, the method further includes:

sending signals to multiple signal receiving devices based on the codebook size and the angular domain set;

receiving response information sent by the signal receiving devices, the response information each including an index corresponding to an optimal codeword;

in a case that the indexes of the optimal codewords fed back by at least two of the signal receiving devices are the same, adjusting the beamwidth of the beam corresponding to the indexes; and

generating an updated codebook size and an updated angular domain set based on the adjusted beamwidth.

Optionally, the method further includes:

determining a coverage area corresponding to the codewords based on the beam directional angles in the angular domain set;

determining amplitude modulation coefficients of the codewords corresponding to the beam directional angles based on the beam directional angles and first information of the antenna array; and

establishing an association relationship among the amplitude modulation coefficients, the beam directional angles, and the coverage area.

Optionally, the first information includes at least one of the following:

wavelength;

aperture;

beam transmission coefficient in free space; or

beam transmission coefficient in a waveguide-like structure.

Optionally, the antenna array is an antenna array based on the leaky wave principle.

An embodiment of this disclosure provides a communication device, including:

a memory used for storing a computer program; a transceiver used for receiving and sending data under the control of the processor; and a processor used for reading the computer program from the memory and performing the following steps:

determining an edge value of an angular domain set corresponding to a beam of an antenna array;

in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area;

obtaining the angular domain set, and determining a codebook size corresponding to the antenna array based on a result of counting the iterative updates;
wherein the codebook size is used for indicating a quantity of codewords contained in a codebook corresponding to the antenna array; the angular domain set includes the beam directional angles obtained in each iterative update.

Optionally, the processor is used for reading the computer program in the memory and performing the following steps:

determining an initial value of the beamwidth based on first information of the antenna array and an initial value of the beam directional angle;
the determining the edge value of the angular domain set corresponding to the beam of the antenna array includes:

determining the edge value of the angular domain set based on the initial value of the beamwidth and an initial edge value of the angular domain set;
wherein the initial edge value of the angular domain set is pre-configured or pre-defined.

Optionally, the processor is used for reading the computer program in the memory and performing the following step:
iteratively updating the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;
determining an updated edge value of the angular domain set based on the updated beamwidth and the updated beam directional angles; and
logging a number of times update occurs.

Optionally, the processor is used for reading the computer program in the memory and performing the following step:
adding the updated beam directional angles into the angular domain set.

Optionally, the processor is used for reading the computer program in the memory and performing the following step:
calculating the updated beamwidth and the updated beam directional angles based on an equation set composed of a function for computing the beamwidth and a first function related to the edge value of the angular domain set.

Optionally, the processor is used for reading the computer program in the memory and performing the following step:

calculating the updated edge value of the angular domain set by using the following formula:

$$\mathrm{edg} = \theta + \frac{\Delta\theta}{2}$$

wherein, edg denotes the edge value of the angular domain set, $\theta$ denotes the beam directional angle, and $\Delta\theta$ denotes the beamwidth.

Optionally, the processor is used for reading the computer program in the memory and performing the following steps:

sending signals to multiple signal receiving devices based on the codebook size and the angular domain set;
receiving response information sent by the signal receiving devices, the response information each including an index corresponding to an optimal codeword;
in a case that the indexes of the optimal codewords fed back by at least two of the signal receiving devices are the same, adjusting the beamwidth of the beam corresponding to the indexes; and
generating an updated codebook size and an updated angular domain set based on the adjusted beamwidth.

Optionally, the processor is used for reading the computer program in the memory and performing the following steps:

determining a coverage area corresponding to the codewords based on the beam directional angles in the angular domain set;

determining amplitude modulation coefficients of the codewords corresponding to the beam directional angles based on the beam directional angles and first information of the antenna array; and

establishing an association relationship among the amplitude modulation coefficients, the beam directional angles, and the coverage area.

Optionally, the first information includes at least one of the following:

wavelength;
aperture;
beam transmission coefficient in free space; or
beam transmission coefficient in a waveguide-like structure.

Optionally, the antenna array is an antenna array based on the leaky wave principle.

An embodiment of this disclosure provides a codebook generation apparatus, including:

a first determining unit, configured to determine an edge value of an angular domain set corresponding to a beam of an antenna array;

a first processing unit, configured to, in a case that the edge value of the angular domain set is less than or equal to a scanning target area of the antenna array, iteratively update a beamwidth, beam directional angles, and the edge value of the angular domain set of the beam until the updated edge value of the angular domain set is greater than the scanning target area;

an obtaining unit, configured to obtain the angular domain set, and determine a codebook size corresponding to the antenna array based on a result of counting the iterative updates;

wherein the codebook size is used for indicating a quantity of codewords contained in a codebook corresponding to the antenna array; the angular domain set includes the beam directional angles obtained in each iterative update.

An embodiment of this disclosure provides a processor-readable storage medium having a computer program stored thereon, wherein the computer program, when executed by a processor, implements the steps of the codebook generation method described above.

The technical solutions disclosed herein have the following beneficial effects.

According to the embodiments of this disclosure, the signal transmitting device determines the edge value of the angular domain set corresponding to the beam. If the edge value is less than or equal to the scanning target area of the antenna array, i.e., the signal of the antenna array cannot cover the scanning target area, then a beamwidth, beam directional angles, and the edge value of the angular domain set of the beam are iteratively updated until the finally obtained edge value of the angular domain set is greater than the scanning target area. The angular domain set contains the beam directional angles of each codeword. The codebook size can be determined based on a result of counting the iterative updates. The signal transmitting device can determine the amplitude modulation coefficient corresponding to the codeword based on the beam directional angles in the codebook that correspond to the codeword. During beamforming of the antenna based on the leaky wave principle, the beam in the corresponding direction can be obtained by ensuring that the amplitude of each radiating element of the antenna array satisfies the state corresponding to the amplitude modulation coefficient.

**BRIEF DESCRIPTION OF THE DRAWINGS**

Fig. 1 is a schematic flowchart of a codebook generation method according to an embodiment of the present disclosure;

Fig. 2 is a schematic diagram of an RHS array according to an embodiment of this disclosure;

Fig. 3 is a schematic structural diagram of a codebook generation apparatus according to an embodiment of the present disclosure;

Fig. 4 is a schematic structural diagram of a communication device according to an embodiment of the present disclosure.

**DETAILED DESCRIPTION**

To make the technical problems, solutions, and advantages of this disclosure clearer, a detailed description will be provided below with reference to the accompanying drawings and specific embodiments. In the following description, specific details such as particular configurations and components are provided merely to aid in a comprehensive understanding of the embodiments of this disclosure. Therefore, those skilled in the art should understand that various changes and modifications can be made to the embodiments described herein without departing from the scope and spirit of this disclosure. Furthermore, for clarity and brevity, descriptions of known functions and structures have been omitted.

It should be understood that the usage of "an embodiment" or "one embodiment" throughout the specification means that a particular feature, structure, or characteristic relating to an embodiment is included in at least one embodiment of this disclosure. Therefore, "an embodiment" or "one embodiment" appearing throughout the specification does not necessarily refer to the same embodiment. Furthermore, these particular features, structures, or characteristics may be combined in any suitable manner in one or more embodiments.

In the various embodiments of this disclosure, it should be understood that the sequence number of each process described below does not imply the order of execution. The execution order of each process should be determined by its function and internal logic, and should not constitute any limitation on the implementation process of the embodiments of this disclosure.

In the embodiments of this disclosure, the term "and/or" describes the relationship between related objects, indicating that three relationships exist. For example, A and/or B can represent three cases: A alone, A and B simultaneously, and B alone. The character "/" generally indicates that the preceding and following related objects have an "or" relationship.

In the embodiments of this disclosure, the term "multiple" refers to two or more, and other quantifiers are similar.

The technical solution of the embodiments of this disclosure will be clearly and completely described below with reference to the accompanying drawings of the embodiments of this disclosure. Obviously, the described embodiments are only some embodiments of this disclosure, and not all embodiments. Based on the embodiments of this disclosure, all other embodiments obtained by those of ordinary skill in the art without creative effort are within the scope of this disclosure.

Embodiments of this disclosure provide a codebook generation method and apparatus, and a communication device to solve the codebook generation problem in leaky-wave antenna control.

The method and apparatus are based on the same creative concept. Since the methods and apparatus solve problems in similar ways, for the implementation of one of the apparatus and method, reference may be made to the other of the apparatus and method, and the repeated parts will not be described again.

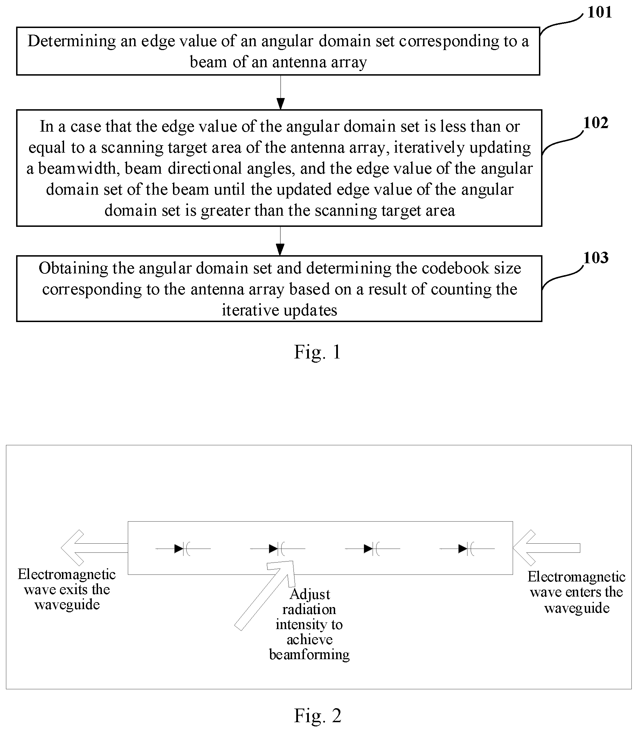

As shown in Fig. 1, an embodiment of this disclosure provides a codebook generation method performed by a communication device. The communication device is a signal transmitting device, which may be a network device (e.g., a base station) or a terminal.

The method specifically includes the following steps 101 to 103.

Step 101: determining an edge value of an angular domain set corresponding to a beam of an antenna array.

In this embodiment, the angular domain set includes beam directional angles, and may include the beam directional angles corresponding to multiple codewords. The edge value of the angular domain set is the edge of the coverage space of the angular domain set. The signal transmitter determines the beam directional angles corresponding to each codeword and determines the edge value of the angular domain set. For example: initialize the angular domain edge (edg) as: edg = 0; initialize the beam directional angle $\theta$ as $\theta = 0$, and add $\theta = 0$ into the angular domain set AS.

Optionally, the antenna array is an antenna array based on the leaky wave principle. An example of such an antenna array is the RHS. As shown in Fig. 2, the RHS utilizes the leaky wave principle to radiate electromagnetic waves and achieves antenna functionality. Its structure uses waveguides to transmit signals, and through openings or adjustable elements on the waveguides, the amplitude of electromagnetic wave radiation is controlled to achieve beamforming.

Step 102: in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area.

The target scanning area is a preset target area $\theta_{target}$. The edge value of the angular domain set being less than or equal to the target scanning area means that the angular domain set cannot cover the target scanning area, that is, the signal of the antenna array cannot cover the target scanning area, and the signal transmission requirements are not met. It is necessary to adjust the beamwidth, the beam directional angles, and the edge value of the angular domain set until the edge value of the angular domain set is greater than the target scanning area, that is, the antenna array can completely cover the target scanning area.

Optionally, the iterative updates of a beamwidth, beam directional angles, and the edge value of the angular domain set of the beam are counted, with the count value incrementing by 1 for each update.

Step 103: obtaining the angular domain set and determining the codebook size corresponding to the antenna array based on a result of counting the iterative updates; wherein, the codebook size is used for indicating a quantity of codewords contained in a codebook corresponding to the antenna array; the angular domain set includes the beam directional angles obtained in each iterative update.

In this embodiment, the codebook size corresponding to the antenna array can be calculated based on a result of counting the iterative updates. The codebook size is the quantity of codewords contained in the codebook. The angular domain set obtained after the iterative updates whose edge value is greater than the scanning target area is the angular domain set of the finally obtained codebook, and the angular domain set includes the beam directional angles corresponding to all codewords. The codebook obtained in this embodiment can be called a basic codebook.

An embodiment of this disclosure provides a codebook generation method. According to the method, a signal transmitting device determines the edge value of the angular domain set corresponding to a beam. If the edge value is less than or equal to the scanning target area of the antenna array (i.e., the antenna array's signal cannot cover the scanning target area), then a beamwidth, beam directional angles, and the edge value of the angular domain set of the beam are iteratively updated until the finally obtained edge value of the angular domain set is greater than the scanning target area. The angular domain set contains the beam directional angles of each codeword. The codebook size can be determined based on the result of counting the iterative updates. The signal transmitting device can determine the amplitude modulation coefficient corresponding to the codeword based on the beam directional angles corresponding to the codeword in the codebook. During beamforming of the antenna based on the leaky wave principle, the beam in the corresponding direction can be obtained by ensuring that the amplitude of each radiating element of the antenna array satisfies the state corresponding to the amplitude modulation coefficient.

As an optional embodiment, the method further includes:

determining an initial value of the beamwidth based on first information of the antenna array and an initial value of the beam directional angle;
the determining the edge value of the angular domain set corresponding to the beam of the antenna array includes:
determining the edge value of the angular domain set based on the initial value of the beamwidth and the initial edge value of the angular domain set; wherein the initial edge value of the angular domain set is pre-configured or pre-defined.

Optionally, the first information includes at least one of the following:

wavelength;
aperture;
beam transmission coefficient in free space; or
beam transmission coefficient in a waveguide-like structure.

In this embodiment, one or more parameters, such as the wavelength, aperture of the antenna array, and the transmission coefficient of the beam scanning the target area, can be set. The initial value of the beamwidth can be calculated based on the foregoing parameters. Specifically, the initial value of the beamwidth can be calculated according to the following beamwidth function:

$$\Delta\theta = 2\sin^{-1}\frac{2.782}{k_0 \text{Len} \cos\theta}$$

in the beamwidth function, $k_0$ is the beam transmission coefficient in a waveguide-like structure, which can be calculated based on the antenna wavelength; Len denotes the antenna aperture; $\theta$ denotes the beam directional angle, and when $\theta = 0$, the calculated $\Delta\theta_0$ value is the initial value of the beamwidth.

After obtaining the initial value of the beamwidth, the edge value of the angular domain set can be calculated based on the initial beamwidth and an initial edge value of the angular domain set. The initial edge value of the angular domain set can be set to 0. In this embodiment, the method for calculating the edge value of the angular domain set based on the initial beamwidth and the initial edge value of the angular domain set is as follows:

$$\text{edg} = \text{edg}_0 + \frac{\Delta\theta_0}{2}$$

wherein, $\text{edg}_0$ denotes the initial edge value of the angular domain set; and $\Delta\theta_0$ is the initial value of the beamwidth.

As an optional embodiment, in a case that the edge value of the angular domain set is less than or equal to the scanning target area of the antenna array, iteratively updating the beamwidth, the beam directional angles, and the edge value of the angular domain set of the beam until the updated edge value of the angular domain set is greater than the scanning target area includes:

iteratively updating the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

Optionally, the method further includes adding the updated beam directional angles into the angular domain set.

In this embodiment, the above steps are repeated until the obtained edge value of the angular domain set is greater than the scanning target area. At this time, the obtained angular domain set is the angular domain set of the final codebook, and the angular domain set contains the beam directional angles corresponding to multiple codewords.

Specifically, after calculating the edge value of the angular domain set based on the initial value of the beamwidth and an initial edge value of the angular domain set, the edge value of the angular domain set is compared with the scanning target area of the antenna array. If the edge value of the angular domain set is less than or equal to the scanning target area of the antenna array, it indicates that the antenna array cannot completely cover the scanning target area, and the relevant parameters need to be updated. Specifically, the updated beamwidth and updated beam directional angles can be determined based on the edge value of the angular domain set, and the updated edge value of the angular domain set can be calculated based on the updated beamwidth and updated beam directional angles. The obtained updated edge value of the angular domain set is compared with the scanning target area. If the updated edge value of the angular domain set is greater than the scanning target area, the iterative update stops, and the angular domain set is output. If the updated edge value of the angular domain set is still less than or equal to the scanning target area, the above steps are repeated until the updated edge value of the angular domain set is greater than the scanning target area.

During the above iterative update process, the number of updates is logged, and when the iterative update stops, the codebook size corresponding to the antenna array is calculated based on the number of updates, that is, the number of codewords is determined.

Optionally, the determining the updated beamwidth and the updated beam directional angles based on the edge value of the angular domain set includes: calculating the updated beamwidth and updated beam directional angles based on an equation set composed of an operating function for computing the beamwidth and a first function related to the edge value of the angular domain set.

Optionally, the equation set can be as follows:

$$\begin{cases} \Delta\theta = 2\sin^{-1}\dfrac{2.782}{k_0 \text{Len}\cos\theta} \\ \theta - \dfrac{\Delta\theta}{2} = \text{edg} \end{cases}$$

wherein, edg denotes the edge value of the angular domain set, $\theta$ denotes the beam directional angle, $\Delta\theta$ denotes the beamwidth; $k_0$ denotes the transmission coefficient of the beam in the free space of the antenna array; Len denotes the aperture of the antenna array. $\theta - \dfrac{\Delta\theta}{2} = \text{edg}$ is a first function related to the edge value of the angular domain set.

It should be noted that the above operating function for computing the beamwidth is only an example, and other calculation methods that can approximately estimate the beamwidth can also be used.

Optionally, the determining the updated edge value of the angular domain set based on the updated beamwidth and the updated beam directional angles includes:

calculating the updated edge value of the angular domain set by using the following formula:

$$\text{edg} = \theta + \frac{\Delta\theta}{2}$$

wherein, edg denotes the edge value of the angular domain set, $\theta$ denotes the beam directional angle, and $\Delta\theta$ denotes

the beamwidth. After obtaining the updated beamwidth $\Delta\theta$ and the updated beam directional angle $\theta$, the updated edge value of the angular domain set is calculated using the above formula. The updated edge value of the angular domain set is compared with the scanning target area. If the updated edge value of the angular domain set is greater than the scanning target area, the update stops; otherwise, the above update steps are repeated.

The following example, using an RHS array as an example, illustrates the execution process of the codebook generation method.

Step 21: Determine the wavelength $\lambda$, RHS aperture (Len), and scanning target area $\theta_{target}$. The wavelength, RHS aperture, and scanning target area can be preset.

Step 22: Initialize counter c = 0, initialize area edge edg = 0, and add $\theta$ = 0 into the AS set.

Step 23: Calculate the initial value of the beamwidth $\Delta\theta$ based on the beamwidth function.

Step 24: Update $edg = edg + \dfrac{\Delta\theta}{2}$ .

Step 25: If edg $\leq \theta_{target}$, update $\theta$ and $\Delta\theta$ by solving problem P.1 and proceed to step 26; if edg > $\theta_{target}$, stop the calculation.

Step 26: Add $\theta$ and -$\theta$ into AS.

Step 27: Update $edg = \theta + \dfrac{\Delta\theta}{2}$ .

Step 28: Update c = c + 1.

Step 29: Determine whether the updated edg is greater than $\theta_{target}$, if the updated edg $\leq \theta_{target}$, repeat steps 25 to 29; if the updated edg > $\theta_{target}$, the calculation is stopped and step 30 is executed.

Step 30: Calculate the codebook size M = 2c + 1.

Step 31: Output M and AS.

Problem P.1 can be expressed as follows:

$$(P.1.)\begin{cases} \Delta\theta = 2\sin^{-1}\dfrac{2.782}{k_0 \text{Len}\cos\theta} \\[2mm] \theta - \dfrac{\Delta\theta}{2} = edg \end{cases}$$

by iteratively searching and solving the above problem, the overlap between codewords is minimized while ensuring coverage area, thus achieving spatial distinguishability.

It should be noted that, apart from the supervision-based codebook generation method mentioned above, the number of codewords M and their respective pointing directions $\theta$ can also be set in advance.

As an optional embodiment, the method further includes:

sending signals to multiple signal receiving devices based on the codebook size and the angular domain set;
receiving response information sent by the signal receiving devices, the response information each including an index corresponding to an optimal codeword;
in a case that the indexes of the optimal codewords fed back by at least two of the signal receiving devices are the same, adjusting the beamwidth of the beam corresponding to the indexes; and
generating an updated codebook size and an updated angular domain set based on the adjusted beamwidth.

In this embodiment, the codebook generated according to this disclosure can be optimized. Specifically, the communication device (here referring to the signal transmitter) itself stores a pre-generated basic codebook, which is the codebook obtained by the codebook generation method described above in the embodiments of this disclosure. The signal transmitter trains each codeword in the codebook, and multiple signal receivers evaluate each codeword by using parameters such as Reference Signal Received Power (RSRP) or Reference Signal Received Quality (RSRQ). After one round of training, the signal receivers feed back the codes corresponding to their optimal codewords to the signal transmitter. If indexes of the codeword sequences fed back by the receivers to the transmitter are different from each other, it indicates that the codebook is sufficient to support the communication requirements of the scenario. If there is a duplicate index among codewords fed back by the signal receivers to the signal transmitter, it indicates that the spatial division characteristics of the codewords need to be further refined. At this point, based on the spatial range corresponding to the duplicated codewords, the codebook generation scheme of this disclosure is used to further refine the spatial resolution by adjusting adjustable parameters, such as adjusting the beamwidth of the beam corresponding to the index, thereby generating a new codebook. The above steps are repeated until the indexes of the codewords fed back by all user equipment are different from each other, thus achieving better communication performance.

Optionally, adaptive codebook generation can also be performed based on the indexes of the optimal codewords fed back by the signal receiving devices. For example: first, obtain the spatial range to be covered by the antenna array, the service accuracy requirement, and the aperture parameters of the antenna array itself (including aperture size, element spacing, transmission coefficient, etc.); and using the above parameters as input, apply the codebook generation method of this disclosure to perform adaptive codebook generation. After the codebook is generated, real-time feedback is provided through the actual beam training process. If the signal accuracy is insufficient (i.e., multiple optimal codewords have the same index, making it difficult to distinguish multiple UEs providing feedback), the beamwidth (corresponding to the service accuracy requirement) can be adjusted, and a new codebook with higher accuracy can be generated for the untrusted region (i.e., the spatial range where UEs are difficult to distinguish). The above training process is then repeated until the quality-of-service requirements are met.

The beamwidth adjustment can be adjustment of a numerical parameter in the operating function for computing the beamwidth. For example, reducing the numerical parameter can achieve the adjustment of the beamwidth.

As an optional embodiment, the method further includes:

determining a coverage area corresponding to the codewords based on the beam directional angles in the angular domain set;
determining amplitude modulation coefficients of the codewords corresponding to the beam directional angles based on the beam directional angles and first information of the antenna array; and
establishing an association relationship among the amplitude modulation coefficients, the beam directional angles, and the coverage area.

Optionally, the first information includes at least one of the following:

wavelength;
aperture;
beam transmission coefficient in free space; or
beam transmission coefficient in a waveguide-like structure.

In this embodiment, after generating the codebook, beamforming can be performed based on the codebook. Specifically, firstly, based on the aperture size of the antenna array and the required coverage area, the directional angle and coverage area corresponding to the required codewords are obtained according to the codebook generated in this disclosure; based on the inherent waveguide transmission constant (the parameter in the first information) of the antenna array itself, the directional angle and coverage area corresponding to the codeword, and based on the beamforming formula, the amplitude modulation coefficient $\alpha_n$ corresponding to the codeword is obtained; then, the signal transmitter stores the amplitude modulation coefficient $\alpha_n$ in its local memory and associates $\alpha_n$ with the corresponding beam directional angle and coverage area in a one-to-one manner.

At the signal transmitter, when the carrier signal (reference wave) is transmitted inside the antenna array, in order to obtain the beam in the corresponding direction, it is only necessary to call the codeword corresponding to the spatial area to be covered (i.e., the coverage range) and ensure that the amplitude of each radiating element on the antenna array satisfies the state corresponding to $\alpha_n$ in the codebook.

Optionally, taking an RHS array as an example, the beamforming formula is as follows.

For an RHS array linearly arranged on the x-axis, the spacing is dx, the position of the nth element is $x_n = x_0 + nd_x$, $x_0$ being the reference position; N is the quantity of radiating elements of the RHS; the RHS's adjustable amplitude modulation coefficient is $\alpha_n$, therefore an obtainable array factor can be expressed as:

$$\mathrm{AF}\left(\theta,\ \phi\right) = \cos\phi \sum_{n=1}^{N} \alpha_n e^{-jk_f x_n} e^{-jk_0 x_n \sin\theta}$$

wherein, for a two-dimensional RHS, $\theta$ is the beam directional angle of one dimension of the RHS; $\phi$ is the directional angle of the other dimension of the two-dimensional RHS, which is simplified to an arbitrary constant in the one-dimensional case, and is set as $\Phi = \pi/2$; $k_f = n_{eff}k_0$ denotes the transmission coefficient of electromagnetic waves in the waveguide-like structure of the RHS, $n_{eff}$ is a constant greater than 1; $k_0$ is the transmission coefficient of electromagnetic waves in free space.

For the waveguide of the RHS, its transmission characteristics can be expressed as:

$$AF(\theta) = \sum_{n=1}^{N} \alpha_n e^{-jk_f x_n} e^{-jk_0 x_n \sin\theta}$$

$$= e^{-jk_0 \ (n_{eff} - \sin\theta) \ x_0} \sum_{n=1}^{N} \alpha_n e^{-jnk_0 \ (n_{eff} + \sin\theta) \ d_x}$$

The gain of the waveguide in the far field is proportional to the absolute value of AF. (based on the Fraunhofer approximation) the absolute value of AF is:

$$|AF(\theta)| = \left| \sum_{n=1}^{N} \alpha_n e^{-jnk_0 \ (n_{eff} + \sin\theta) \ d_x} \right|$$

For a target direction $\theta_t$, it is only necessary to adjust the amplitude modulation coefficient $\alpha_n$ to satisfy the following:

$$\alpha_n = e^{jnk_0 \ (n_{eff} + \sin\theta_t) \ d_x}$$

For some RHSs, the amplitude cannot be negative. In this case, the amplitude can be set within the range that the RHS can achieve, as follows:

$$\alpha_n = D_n + A_n \cos(nk_0(n_{eff} + \sin\theta_t)d_x)$$

$$= D_n + A_n \left( \frac{e^{jnk_0 n_{eff} d_x} e^{jnk_0 \sin\theta_t d_x}}{2} + \frac{e^{-jnk_0 n_{eff} d_x} e^{-jnk_0 \sin\theta_t d_x}}{2} \right)$$

where $D_n$ is the average of the angular range that the antenna array can cover, $A_n$ is half the difference of boundaries of the angular range that the antenna array can cover.

It should be noted that the amplitude modulation coefficient can be equivalent to spatial modulation, therefore when the above amplitude design is introduced, the AF can be rewritten as:

$$AF(\theta) = \sum_{n=1}^{N} D_n e^{-jk_0 x_n(n_{eff} - \sin\theta)}$$

$$+ \sum_{n=1}^{N} \frac{A_n}{2} e^{-jk_0 x_n(\sin\theta - \sin\theta_t)}$$

$$+ \sum_{n=1}^{N} \frac{A_n}{2} e^{-jk_0 x_n \ (\sin\theta + \sin\theta_t + 2n_{eff})}$$

Since $n_{eff}$ is greater than 1, among the three spatial harmonics mentioned above, the first and third terms of the above formula are evanescent wave, and thus, only the second term in the target direction forms a directional beam in the far field.

Based on the waveguide transmission constant of the antenna array itself, the directional angles and coverage area corresponding to the codeword, and based on the beamforming formula mentioned above, the amplitude modulation coefficient $\alpha_n$ corresponding to the codeword can be determined, and $\alpha_n$ can be associated one-to-one with the corresponding beam directional angle and coverage area. When the carrier signal is transmitted inside the antenna array, it is only necessary to call the codeword corresponding to the spatial information according to the coverage area, and ensure that the amplitude of each radiating element on the antenna array satisfies the state corresponding to $\alpha_n$ in the codebook, to obtain the beam in the corresponding direction.

Embodiments of this disclosure propose a beamforming method for RHS and an adaptive generation algorithm for the corresponding codebook size and direction, solving the problem that array antenna codebook generation methods in related art cannot be applied to antenna arrays based on the leaky wave principle. The signal transmitting device determines the edge value of the angular domain set corresponding to the beam. If the edge value is less than or equal to the scanning target area of the antenna array, i.e., the signal of the antenna array cannot cover the scanning target area, then a beamwidth, beam directional angles, and the edge value of the angular domain set of the beam are iteratively updated until the finally obtained edge value of the angular domain set is greater than the scanning target area. The angular domain set contains the beam directional angles of each codeword. The codebook size can be determined based on a result of counting the iterative updates. The signal transmitting device can determine the amplitude modulation coefficient corresponding to the codeword based on the beam directional angles of the codeword in the codebook. During beamforming of the antenna based on the leaky wave principle, the beam in the corresponding direction can be obtained by ensuring that the amplitude of each radiating element of the antenna array satisfies the state corresponding to the amplitude modulation coefficient.

The above embodiments describe the codebook generation method of this disclosure. The following embodiments will further describe the corresponding apparatus with reference to the accompanying drawings.

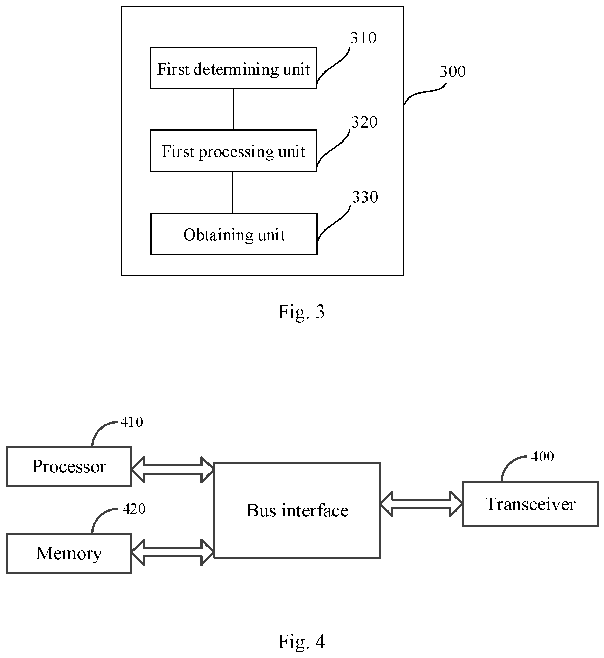

Specifically, as shown in Fig. 3, an embodiment of the disclosure provides a codebook generation apparatus 300, applied to a communication device. The communication device is a signal transmitting device, and can be a base station or a terminal. The codebook generation apparatus 300 includes:

a first determining unit 310, configured to determine an edge value of an angular domain set corresponding to a beam of an antenna array;

a first processing unit 320, configured to, in a case that the edge value of the angular domain set is less than or equal to a scanning target area of the antenna array, iteratively update a beamwidth, beam directional angles, and the edge value of the angular domain set of the beam until the updated edge value of the angular domain set is greater than the scanning target area;

an obtaining unit 330, configured to obtain the angular domain set and determine the codebook size corresponding to the antenna array based on a result of counting the iterative updates;

wherein the codebook size is used for indicating a quantity of codewords contained in a codebook corresponding to the antenna array; the angular domain set includes the beam directional angles obtained in each iterative update.

Optionally, the apparatus further includes:

a second determining unit, configured to determine an initial value of the beamwidth based on first information of the antenna array and an initial value of the beam directional angle;

the first determining unit is specifically configured to:

determining the edge value of the angular domain set based on the initial value of the beamwidth and an initial edge value of the angular domain set;

wherein the initial edge value of the angular domain set is pre-configured or pre-defined.

Optionally, the first processing unit is specifically configured to:

iteratively update the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

Optionally, the apparatus further includes:

an adding unit, configured to add the updated beam directional angles into the angular domain set.

Optionally, the first processing unit is specifically configured to:

calculate the updated beamwidth and the updated beam directional angles based on an equation set composed of a function for computing the beamwidth and a first function related to the edge value of the angular domain set.

Optionally, the first processing unit is specifically configured to:

calculate the updated edge value of the angular domain set by using the following formula:

$$\mathrm{edg} = \theta + \frac{\Delta\theta}{2}$$

wherein, edg denotes the edge value of the angular domain set, $\theta$ denotes the beam directional angle, and $\Delta\theta$ denotes the beamwidth.

Optionally, the apparatus further includes:

a sending unit, configured to send signals to multiple signal receiving devices based on the codebook size and the angular domain set;
a receiving unit, configured to receive response information sent by the signal receiving devices, the response information each including an index corresponding to an optimal codeword;
a second processing unit, configured to, in a case that the indexes of the optimal codewords fed back by at least two of the signal receiving devices are the same, adjust the beamwidth of the beam corresponding to the indexes; and
a third processing unit, configured to generate an updated codebook size and an updated angular domain set based on the adjusted beamwidth.

Optionally, the apparatus further includes:

a third determining unit, configured to determine a coverage area corresponding to the codewords based on the beam directional angles in the angular domain set;
a fourth determining unit, configured to determine amplitude modulation coefficients of the codewords corresponding to the beam directional angles based on the beam directional angles and first information of the antenna array; and
an establishing unit, configured to establish an association relationship among the amplitude modulation coefficients, the beam directional angles, and the coverage area.

Optionally, the first information includes at least one of the following:

wavelength;
aperture;
beam transmission coefficient in free space; or
beam transmission coefficient in a waveguide-like structure.

Optionally, the antenna array is an antenna array based on the leaky wave principle.

It should be noted that the apparatus provided in this embodiment can implement all the method steps implemented in the method embodiment performed by the communication device, and can achieve the same technical effect. Therefore, the parts and beneficial effects that are the same as those in the method embodiment will not be described in detail here.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor -readable storage medium. Based on this understanding, the technical solution of this disclosure, in essence, or the part that contributes to related art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The storage medium includes various media capable of storing program code, such as USB flash drives, portable hard drives, read-only memory (ROM), random access memory (RAM), magnetic disks, or optical discs.

As shown in Fig. 4, an embodiment of this disclosure further provides a communication device, including: a memory 420, a transceiver 400, and a processor 410; wherein, the memory 420 is used for storing a computer program; the transceiver 400 is used for receiving and sending data under the control of the processor 410; and the processor 410 is used for reading the computer program in the memory and performing the following steps:

determining an edge value of an angular domain set corresponding to a beam of an antenna array;

in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area;

obtaining the angular domain set, and determining a codebook size corresponding to the antenna array based on a result of counting the iterative updates;

wherein the codebook size is used for indicating a quantity of codewords contained in a codebook corresponding to the antenna array; the angular domain set includes the beam directional angles obtained in each iterative update.

Optionally, the processor is used for reading the computer program in the memory and performing the following steps:

determining an initial value of the beamwidth based on first information of the antenna array and an initial value of the beam directional angle;

the determining the edge value of the angular domain set corresponding to the beam of the antenna array includes:

determining the edge value of the angular domain set based on the initial value of the beamwidth and an initial edge value of the angular domain set;

wherein the initial edge value of the angular domain set is pre-configured or pre-defined.

Optionally, the processor is used for reading the computer program in the memory and performing the following step:

iteratively updating the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

Optionally, the processor is used for reading the computer program in the memory and performing the following step:

adding the updated beam directional angles into the angular domain set.

Optionally, the processor is used for reading the computer program in the memory and performing the following step:

calculating the updated beamwidth and the updated beam directional angles based on an equation set composed of a function for computing the beamwidth and a first function related to the edge value of the angular domain set.

Optionally, the processor is used for reading the computer program in the memory and performing the following steps:

calculating the updated edge value of the angular domain set by using the following formula:

$$\mathrm{edg} = \theta + \frac{\Delta\theta}{2}$$

wherein, edg denotes the edge value of the angular domain set, $\theta$ denotes the beam directional angle, and $\Delta\theta$ denotes the beamwidth.

Optionally, the processor is used for reading the computer program in the memory and performing the following steps:

sending signals to multiple signal receiving devices based on the codebook size and the angular domain set;

receiving response information sent by the signal receiving devices, the response information each including an index corresponding to an optimal codeword;

in a case that the indexes of the optimal codewords fed back by at least two of the signal receiving devices are the same, adjusting the beamwidth of the beam corresponding to the indexes; and

generating an updated codebook size and an updated angular domain set based on the adjusted beamwidth.

Optionally, the processor is used for reading the computer program in the memory and performing the following steps:

determining a coverage area corresponding to the codewords based on the beam directional angles in the angular domain set;

determining amplitude modulation coefficients of the codewords corresponding to the beam directional angles based on the beam directional angles and first information of the antenna array; and

establishing an association relationship among the amplitude modulation coefficients, the beam directional angles, and the coverage area.

Optionally, the first information includes at least one of the following:

wavelength;

aperture;

beam transmission coefficient in free space; or

beam transmission coefficient in a waveguide-like structure.

Optionally, the antenna array is an antenna array based on the leaky wave principle.

In Fig. 4, the bus architecture may include any number of interconnected buses and bridges, specifically linking various circuits of one or more processors represented by processor 410 and memory represented by memory 420. The bus architecture may also link various other circuits such as peripheral devices, voltage regulators, and power management circuits, which are well known in the art and therefore will not be described further herein. The bus interface provides an interface. Transceiver 400 may be multiple elements, including a transmitter and a transceiver, providing units for communicating with various other devices over a transmission medium. Processor 410 is responsible for managing the bus architecture and general processing, and memory 420 may store data used by processor 410 during operation.

The processor 410 can be a central processing unit (CPU), an application-specific integrated circuit (ASIC), a field-programmable gate array (FPGA), or a complex programmable logic device (CPLD). The processor can also adopt a multi-core architecture.

It should be noted that the communication device provided in the embodiment can implement all the method steps implemented in the method embodiment performed by the communication device, and can achieve the same technical effect. Therefore, the parts that are the same as those in the method embodiment and their beneficial effects will not be described in detail here.

In addition, a specific embodiment of this disclosure also provides a processor-readable storage medium storing a computer program thereon, wherein the program, when being executed by a processor, implements the steps of the codebook generation method described above and achieves the same technical effect. To avoid repetition, it will not be described again here. The readable storage medium can be any available medium or data storage device that the processor can access, including but not limited to magnetic memory (such as floppy disks, hard disks, magnetic tapes, magneto-optical disks (MO), etc.), optical memory (such as compact discs (CD), digital video discs (DVD), Blu-ray discs (BD), high-definition versatile discs (HVD), etc.), and semiconductor memory (such as read-only memory (ROM), erasable programmable read-only memory (EPROM), electrically erasable programmable read-only memory (EEPROM), non-volatile memory (NAND FLASH), solid-state disks (SSD), etc.).

It should be noted that the technical solutions provided in the embodiments of this disclosure are applicable to a variety of systems, especially 5th-Generation (5G) systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR), etc. All of these systems include a terminal device and a network device. The system may also include a core network component, such as an evolved packet system (EPS) or a 5G system (5GS).

The terminal device involved in the embodiments of this disclosure can be a device that provides voice and/or data connectivity to users, handheld device with wireless connectivity, or other processing device connected to a wireless modem. The names of the terminal device may differ in different systems; for example, in a 5G system, a terminal device can be called user equipment (UE). A wireless terminal device can communicate with one or more core networks (CNs) via a Radio Access Network (RAN). The wireless terminal device can be a mobile terminal device, such as mobile phone (or "cellular" phone) and computer with mobile terminal device, for example, portable, pocket-sized, handheld, computer-embedded, or vehicle-mounted mobile device that exchanges voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). The wireless terminal device can also be referred to as a system, subscriber unit, subscriber station, mobile station, mobile, remote station, access point, remote terminal, access terminal, user terminal, user agent, or user device, but the embodiments of this disclosure are not limited thereto.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to exchange received air frames with Internet Protocol (IP) packets, acting as a router between the wireless terminal device and the rest of the access network, which may include an Internet Protocol (IP) communication network. The network device may also coordinate the attribute management of the air interface. For example, the network device involved in the embodiments of this disclosure can be a base transceiver station (BTS) in a Global System for Mobile communications (GSM) or Code Division Multiple Access (CDMA) system, a 5G base station (gNB) in a next-generation 5G network architecture, a Home evolved Node B (HeNB), a relay node, a femto, a pico, etc., and the embodiments of this disclosure are not limited thereto. In some network structures, the network device may include a centralized unit (CU) node and a distributed unit (DU) node, which may also be geographically separated.

A network device and a terminal device can each use one or more antennas for Multiple Input Multiple Output (MIMO) transmission. MIMO transmission can be Single User MIMO (SU-MIMO) or Multiple User MIMO (MU-MIMO). Depending on the configuration and number of antenna combinations, MIMO transmission can be 2D-MIMO, 3D-MIMO, Full Dimension MIMO (FD-MIMO), or massive-MIMO, and can also be diversity transmission, pre-coded transmission, or beamforming transmission, etc.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program codes.

This disclosure is described with reference to flowcharts and/or block diagrams of methods, devices (systems), and computer program products according to embodiments of this disclosure. It will be understood that each block of the flowcharts and/or block diagrams, and combinations of blocks in the flowcharts and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, when being executed by the processor of the computer or other programmable data processing device, create means for implementing the functions specified in one or more blocks of the flowcharts and/or the block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more blocks of flowcharts and/or block diagrams.

These processor-executable instructions can also be loaded onto a computer or other programmable data processing device to cause a series of operational steps to be performed on the computer or other programmable device to produce a computer-implemented process, such that the instructions, when being executed by the computer or other programmable device, provide steps for implementing the functions specified in one or more blocks of flowcharts and/or block diagrams.

It should be noted that the above division of modules is merely a logical functional division. In actual implementation, they can be fully or partially integrated into a single physical entity, or they can be physically separated. Furthermore, these modules can be implemented entirely by software called by a processing element; they can be fully implemented in hardware; or some modules can be implemented by software called by a processing element, while others are implemented in hardware. For example, a determination module can be a standalone processing element, or it can be integrated into a chip in the apparatus. Alternatively, it can be stored as program codes in the memory of the apparatus, and is called by a processing element of the apparatus to perform the function of the determination module. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be implemented through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using program codes scheduled by a processing element, the processing element can be a general-purpose processor, such as a central processing unit (CPU) or other processor capable of calling program codes. Furthermore, these modules can be integrated together to be implemented in the form of a system-on-a-chip (SOC).

The terms "first", "second" and the like used the specification and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having" and any variations thereof, are intended to cover non-exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus. Additionally, the use of "and/or" in the specification and claims indicates at least one of the connected objects, e.g., A and/or B and/or C indicating seven possibilities: A alone, B alone, C alone, and both A and B, both B and C, both A and C, and all of A, B and C. Similarly, the use of "at least one of A or B" in this specification and claims should be understood as "A alone, B alone, or both A and B."

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

**Claims**

1. A codebook generation method, including:

   determining an edge value of an angular domain set corresponding to a beam of an antenna array;
   in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area;
   obtaining the angular domain set, and determining a codebook size corresponding to the antenna array based on a result of counting the iterative updates;
   wherein the codebook size is used for indicating a quantity of codewords contained in a codebook corresponding to the antenna array; the angular domain set includes the beam directional angles obtained in each iterative update.

2. The method according to claim 1, further including:

   determining an initial value of the beamwidth based on first information of the antenna array and an initial value of the beam directional angle;
   the determining the edge value of the angular domain set corresponding to the beam of the antenna array includes:

      determining the edge value of the angular domain set based on the initial value of the beamwidth and an initial edge value of the angular domain set;
      wherein the initial edge value of the angular domain set is pre-configured or pre-defined.

3. The method according to claim 1, wherein, in a case that the edge value of the angular domain set is less than or equal to the scanning target area of the antenna array, iteratively updating the beamwidth, the beam directional angles, and the edge value of the angular domain set of the beam until the updated edge value of the angular domain set is greater than the scanning target area includes:
   iteratively updating the beamwidth, the beam directional angles, and the edge value of the angular domain set according to the following steps until the updated edge value of the angular domain set is greater than the scanning target area:

      in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

**4.** The method according to claim 1 or 3, further including:
adding the updated beam directional angles into the angular domain set.

**5.** The method according to claim 3, wherein the determining the updated beamwidth and the updated beam directional angles based on the edge value of the angular domain set includes:
calculating the updated beamwidth and the updated beam directional angles based on an equation set composed of a function for computing the beamwidth and a first function related to the edge value of the angular domain set.

**6.** The method according to claim 3, wherein the determining the updated edge value of the angular domain set based on the updated beamwidth and the updated beam directional angles includes:

calculating the updated edge value of the angular domain set by using the following formula:

$$\text{edg} = \theta + \frac{\Delta\theta}{2}$$

wherein, edg denotes the edge value of the angular domain set, $\theta$ denotes the beam directional angle, and $\Delta\theta$ denotes the beamwidth.

**7.** The method according to claim 1, further including:

sending signals to multiple signal receiving devices based on the codebook size and the angular domain set;

receiving response information sent by the signal receiving devices, the response information each including an index corresponding to an optimal codeword;

in a case that the indexes of the optimal codewords fed back by at least two of the signal receiving devices are the same, adjusting the beamwidth of the beam corresponding to the indexes; and

generating an updated codebook size and an updated angular domain set based on the adjusted beamwidth.

**8.** The method according to claim 1, further including:

determining a coverage area corresponding to the codewords based on the beam directional angles in the angular domain set;

determining amplitude modulation coefficients of the codewords corresponding to the beam directional angles based on the beam directional angles and first information of the antenna array; and

establishing an association relationship among the amplitude modulation coefficients, the beam directional angles, and the coverage area.

**9.** The method according to claim 2 or 8, wherein the first information includes at least one of the following:

wavelength;

aperture;

beam transmission coefficient in free space; or

beam transmission coefficient in a waveguide-like structure.

**10.** The method according to claim 1, wherein the antenna array is an antenna array based on the leaky wave principle.

**11.** A communication device, including: a memory, a transceiver, and a processor;

wherein the memory is used for storing a computer program; the transceiver is used for receiving and sending data under the control of the processor; and the processor is used for reading the computer program from the memory and performing the following steps:

determining an edge value of an angular domain set corresponding to a beam of an antenna array;

in a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area;

obtaining the angular domain set, and determining a codebook size corresponding to the antenna array based on a result of counting the iterative updates;

wherein the codebook size is used for indicating a quantity of codewords contained in a codebook corresponding to the antenna array; the angular domain set includes the beam directional angles obtained in each iterative update.

12. The communication device according to claim 11, wherein the processor is used for reading the computer program from the memory and performing the following steps:

determining an initial value of the beamwidth based on first information of the antenna array and an initial value of the beam directional angle;

the determining the edge value of the angular domain set corresponding to the beam of the antenna array includes:

determining the edge value of the angular domain set based on the initial value of the beamwidth and an initial edge value of the angular domain set;

wherein the initial edge value of the angular domain set is pre-configured or pre-defined.

13. The communication device according to claim 11, wherein the processor is used for reading the computer program from the memory and performing the following steps:

iteratively updating the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

14. The communication device according to claim 11 or 13, wherein the processor is used for reading the computer program from the memory and performing the following step:

adding the updated beam directional angles into the angular domain set.

15. The communication device according to claim 13, wherein the processor is used for reading the computer program from the memory and performing the following step:

calculating the updated beamwidth and the updated beam directional angles based on an equation set composed of a function for computing the beamwidth and a first function related to the edge value of the angular domain set.

16. The communication device according to claim 13, wherein the processor is used for reading the computer program from the memory and performing the following step:

calculating the updated edge value of the angular domain set by using the following formula:

$$\mathrm{edg} = \theta + \frac{\Delta\theta}{2}$$

wherein, edg denotes the edge value of the angular domain set, $\theta$ denotes the beam directional angle, and $\Delta\theta$ denotes the beamwidth.

17. The communication device according to claim 11, wherein the processor is used for reading the computer program from the memory and performing the following steps:

sending signals to multiple signal receiving devices based on the codebook size and the angular domain set;
receiving response information sent by the signal receiving devices, the response information each including an index corresponding to an optimal codeword;
in a case that the indexes of the optimal codewords fed back by at least two of the signal receiving devices are the same, adjusting the beamwidth of the beam corresponding to the indexes; and
generating an updated codebook size and an updated angular domain set based on the adjusted beamwidth.

18. The communication device according to claim 11, wherein the processor is used for reading the computer program from the memory and performing the following steps:

determining a coverage area corresponding to the codewords based on the beam directional angles in the angular domain set;
determining amplitude modulation coefficients of the codewords corresponding to the beam directional angles based on the beam directional angles and first information of the antenna array; and
establishing an association relationship among the amplitude modulation coefficients, the beam directional angles, and the coverage area.

19. The communication device according to claim 12 or 18, wherein the first information includes at least one of the following:

wavelength;
aperture;
beam transmission coefficient in free space; or
beam transmission coefficient in a waveguide-like structure.

20. The communication device according to claim 11, wherein the antenna array is an antenna array based on the leaky wave principle.

21. A codebook generation apparatus, including:

a first determining unit, configured to determine an edge value of an angular domain set corresponding to a beam of an antenna array;
a first processing unit, configured to, in a case that the edge value of the angular domain set is less than or equal to a scanning target area of the antenna array, iteratively update a beamwidth, beam directional angles, and the edge value of the angular domain set of the beam until the updated edge value of the angular domain set is greater than the scanning target area; and
an obtaining unit, configured to obtain the angular domain set, and determine a codebook size corresponding to the antenna array based on a result of counting the iterative updates;
wherein the codebook size is used for indicating a quantity of codewords contained in a codebook corresponding to the antenna array; the angular domain set includes the beam directional angles obtained in each iterative update.

22. The apparatus according to claim 21, further including:

a second determining unit, configured to determine an initial value of the beamwidth based on first information of the antenna array and an initial value of the beam directional angle;
the first determining unit is specifically configured to:

determine the edge value of the angular domain set based on the initial value of the beamwidth and an initial edge value of the angular domain set;
wherein the initial edge value of the angular domain set is pre-configured or pre-defined.

23. The apparatus according to claim 21, wherein the first processing unit is specifically configured to:
iteratively update the beamwidth, the beam directional angles, and the edge value of the angular domain set according to the following steps until the updated edge value of the angular domain set is greater than the scanning target area:

in a case that the edge value of the angular domain set is less than or equal to a scanning target area of the antenna array, determining an updated beamwidth and updated beam directional angles based on the edge value of the angular domain set;

determining an updated edge value of the angular domain set based on the updated beamwidth and the updated beam directional angles; and

logging a number of times update occurs.

24. The apparatus according to claim 21 or 23, further including:
an adding unit, configured to add the updated beam directional angles into the angular domain set.

25. The apparatus according to claim 23, wherein the first processing unit is specifically configured to:
calculate the updated beamwidth and the updated beam directional angles based on an equation set composed of a function for computing the beamwidth and a first function related to the edge value of the angular domain set.

26. The apparatus according to claim 23, wherein the first processing unit is specifically configured to:

calculate the updated edge value of the angular domain set by using the following formula:

$$\mathrm{edg} = \theta + \frac{\Delta\theta}{2}$$

wherein, edg denotes the edge value of the angular domain set, $\theta$ denotes the beam directional angle, and $\Delta\theta$ denotes the beamwidth.

27. The apparatus according to claim 21, further including:

a sending unit, configured to send signals to multiple signal receiving devices based on the codebook size and the angular domain set;

a receiving unit, configured to receive response information sent by the signal receiving devices, the response information each including an index corresponding to an optimal codeword;

a second processing unit, configured to, in a case that the indexes of the optimal codewords fed back by at least two of the signal receiving devices are the same, adjust the beamwidth of the beam corresponding to the indexes; and

a third processing unit, configured to generate an updated codebook size and an updated angular domain set based on the adjusted beamwidth.

28. The apparatus according to claim 21, further including:

a third determining unit, configured to determine a coverage area corresponding to the codewords based on the beam directional angles in the angular domain set;

a fourth determining unit, configured to determine amplitude modulation coefficients of the codewords corresponding to the beam directional angles based on the beam directional angles and first information of the antenna array; and

an establishing unit, configured to establish an association relationship among the amplitude modulation coefficients, the beam directional angles, and the coverage area.

29. The apparatus according to claim 22 or 28, wherein the first information includes at least one of the following:

wavelength;

aperture;

beam transmission coefficient in free space; or

beam transmission coefficient in a waveguide-like structure.

30. The apparatus according to claim 21, wherein the antenna array is an antenna array based on the leaky wave principle.

31. A processor-readable storage medium having a computer program stored thereon, wherein the computer program, when executed by a processor, implements the steps of the codebook generation method according to any one of claims 1 to 10.

Determining an edge value of an angular domain set corresponding to a beam of an antenna array                                                                 101

In a case that the edge value of the angular domain set is less than or equal to a scanning target area of the antenna array, iteratively updating a beamwidth, beam directional angles, and the edge value of the angular domain set of the beam until the updated edge value of the angular domain set is greater than the scanning target area                                102

Obtaining the angular domain set and determining the codebook size corresponding to the antenna array based on a result of counting the iterative updates                                                                 103

Fig. 1

Electromagnetic wave exits the waveguide

Adjust radiation intensity to achieve beamforming

Electromagnetic wave enters the waveguide

Fig. 2

First determining unit ⌒310

First processing unit ⌒320

Obtaining unit ⌒330

300

Fig. 3

Processor ⌒410

Memory ⌒420

Bus interface

Transceiver ⌒400

Fig. 4

## INTERNATIONAL SEARCH REPORT

| International application No. |
| --- |
| **PCT/CN2024/100129** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC:H04B,H04W

Documentation searched other than minimum documentation to the extent that such documents are included in the fields searched

Electronic data base consulted during the international search (name of data base and, where practicable, search terms used)

CNTXT, ENTXTC, DWPI, IEEE: 边缘, 边缘值, 波束, 调整, 迭代, 范围, 覆盖, 更新, 计数, 角, 漏波, 码本, 码字, 目标, 天线阵, 指向角, edge, beam, coverage, angle, range, codebook, direction, array, iteration

**C. DOCUMENTS CONSIDERED TO BE RELEVANT**

| Category* | Citation of document, with indication, where appropriate, of the relevant passages | Relevant to claim No. |
| --- | --- | --- |
| A | US 2018331740 A1 (INTEL CORP.) 15 November 2018 (2018-11-15) description, paragraphs 35 and 54-81 | 1-31 |
| A | CN 109039413 A (BEIHANG UNIVERSITY) 18 December 2018 (2018-12-18) entire document | 1-31 |
| A | CN 109495150 A (SOUTHEAST UNIVERSITY) 19 March 2019 (2019-03-19) entire document | 1-31 |
| A | CN 114826347 A (HARBIN INSTITUTE OF TECHNOLOGY, SHENZHEN) 29 July 2022 (2022-07-29) entire document | 1-31 |
| A | US 2022140885 A1 (TELEFONAKTIEBOLAGET LM ERICSSON (PUBL)) 05 May 2022 (2022-05-05) entire document | 1-31 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 August 2024** | **19 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100129**

| Patent document cited in search report | | | Publication date (day/month/year) | Patent family member(s) | | | Publication date (day/month/year) |
|---|---|---|---|---|---|---|---|
| US | 2018331740 | A1 | 15 November 2018 | DE | 102018111194 | A1 | 15 November 2018 |
| CN | 109039413 | A | 18 December 2018 | None | | | |
| CN | 109495150 | A | 19 March 2019 | None | | | |
| CN | 114826347 | A | 29 July 2022 | None | | | |
| US | 2022140885 | A1 | 05 May 2022 | EP | 3939173 | A1 | 19 January 2022 |
| | | | | WO | 2020182295 | A1 | 17 September 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311059800